(19) Europäisches Patentamt

European Patent Office

Office européen des brevets

(11) Numéro de publication: **0 221 787**
**A2**

(12) **DEMANDE DE BREVET EUROPEEN**

(21) Numéro de dépôt: **86401878.3**

(22) Date de dépôt: **26.08.86**

(51) Int. Cl.⁴: **E 04 B 2/76**

(30) Priorité: **06.09.85 FR 8513251**

(43) Date de publication de la demande:
**13.05.87 Bulletin 87/20**

(84) Etats contractants désignés:
**AT BE CH DE FR GB IT LI LU NL SE**

(71) Demandeur: **MECANOBLOC**
**La Rachée**
**F-91530 Saint Cheron (FR)**

(72) Inventeur: **Chaudron, Jean-Paul**
**5bis rue Henri Loin**
**F-91530 Saint Cheron (FR)**

(74) Mandataire: **Thibon-Littaye, Annick et al**
**Cabinet A. THIBON-LITTAYE 11 rue de l'Etang**
**F-78160 Marly-le-Roi (FR)**

(54) **Eléments de construction, notamment pour la fabrication de cloisons et d'encadrements.**

㊗ Eléments de construction comprenant des profilés et des organes pour leur assemblage à angle droit. Ils sont caractérisés en ce que les organes d'assemblage sont constitués par des pinces (5) à moyens de commande d'écartement forcé avec blocage des mors, en ce qu'au moins un profilé (2a,2b) présente latéralement, au moins une rainure longitudinale (61) semi-tubulaire à section alvéolaire ouverte, parallèle à l'axe du profilé et d'ouverture rectiligne laissant passage aux mors resserrés d'une pince d'assemblage mais interdisant le passage aux mors écartés, en ce qu'au moins un profilé présente au moins un conduit tubulaire (58), parallèle à l'axe du profilé, de section correspondant à l'encombrement du corps d'une pince d'assemblage et en ce qu'au moins un profilé présente, au moins une ouverture d'accès de l'extérieur aux moyens de commande d'écartement d'une pince.

FIG-7

## Description

ELEMENTS DE CONSTRUCTION, NOTAMMENT POUR LA FABRICATION DE CLOISONS ET D'ENCADREMENTS

La présente invention concerne l'industrie de la construction et, plus particulièrement, des éléments utilisables et réutilisables, pour la construction d'encadrements et de cloisons et cloisonnements amovibles de bâtiments.

On utilise couramment en construction des profilés, généralement en métal léger, parfois en matière plastique. Certains de ces profilés sont fixés à un plan horizontal d'une construction par boulonnage direct, ou par l'intermédiaire d'équerres ou de semelles. Ils servent de montants porteurs et sont réunis par d'autres profilés servant de lisses ou de poutrelles d'entretoisement qui contribuent au maintien de plaques de cloisonnement diverses en bois, en verre, en agglomérés, en matière plastique, ou en carrelage, ou encore encadrent des huisseries de portes ou de fenêtres.

Ces profilés classiques sont assemblés les uns aux autres, généralement par vissage ou boulonnage direct, ou au moyen d'équerres ou de plaques de jonction, ou encore avec des moyens d'assemblage intercalaires plus complexes.

Ces modes d'assemblage classiques présentent de nombreux inconvénients, dont la nécessité de nombreux perçages, éventuellement de taraudage des profilés, souvent le découpage d'une extrémité de profilé pour dégager en bout un prolongement plat qui servira de patte de fixation sur un autre profilé.

Tout ceci nécessite de la main-d'oeuvre et de l'outillage et grève le coût d'une telle construction. De plus, l'aspect de l'assemblage est d'une esthétique peu flatteuse.

Pour améliorer cette esthétique et cacher partiel lement les moyens d'assemblage, ainsi que pour procurer des saillies plates utiles pour de tels assemblages, de nombreux profilés classiques sont hérissés extérieurement d'une pluralité d'ailettes radiales parallèles à l'axe du profilé, issues d'un noyau tubulaire généralement rectangulaire. Ces ailettes sont découpées à la demande suivant les besoins de l'assemblage.

Un autre inconvénient des modes de construction classique avec de tels profilés réside dans la difficulté d'ajustage en hauteur des profilés montants porteurs entre deux niveaux d'une construction, notamment entre plancher et plafond, du fait de la fixation directe du profilé sur l'un des plans horizontaux. Le découpage du profilé à la bonne longueur étant pratiquement impossible, on a généralement recours à des cales qui nuisent encore à l'esthétique de l'assemblage final.

En outre, avec les moyens d'assemblage classiques, il est assez difficile d'abouter deux profilés à angle droit sans jeu, sauf à recourir à des moyens de traction par des tirants, ou même des vérins, ce qui complique encore l'assemblage.

L'invention a pour but de pallier les inconvénients des constructions classiques par assemblage de profilés, et d'apporter des moyens de construction simples. peu onéreux, d'assemblage facile sans préparation particulière ni outillage spécial et de recouvrement esthétique.

L'invention a pour objet des éléments de construction assemblables et désassemblables pour la fabrication, notamment, de cloisons et d'encadrements, comprenant plusieurs profilés sectionnés perpendiculairement à leur axe et des organes pour leur assemblage, à angle droit, caractérisés en ce que les organes d'assemblage sont constitués par des pinces à moyen de commande d'écartement forcé avec blocage des mors, en ce qu'au moins, un profilé présente latéralement au moins une rainure longitudinale semi-tubulaire à section alvéolaire ouverte, parallèle à l'axe du profilé et d'ouverture rectiligne laissant passage aux mors resserrés d'une pince d'assemblage mais interdisant le passage aux mors écartés, en ce qu'au moins un profilé présente au moins un conduit tubulaire, parallèle à l'axe du profilé, de section correspondant à l'encombrement du corps d'une pince d'assemblage et en ce qu'au moins un profilé présente au moins une ouverture d'accès de l'extérieur aux moyens de commande d'écartement d'une pince.

De tels éléments de construction comprennent avantageusement au moins une pince plate de forme générale rectangulaire comportant deux bras symétriques affrontés par des faces planes et présentant chacun, à une extrémité constituant le mors, une rainure rectiligne à bords arrondis perpendiculaire à l'axe de la pince, et articulés l'un à l'autre à leur autre extrémité, les moyens d'écartement des mors comprenant une vis faisant saillie à l'extérieur de la pince et traversant une ouverture d'au moins une paroi du profilé pour maintenir la pince dans son conduit avant assemblage des profilés.

Les deux bras d'une telle pince peuvent être articulés l'un à l'autre à l'intérieur d'un sabot en U creusé d'une rainure perpendiculaire à l'axe de la pince et de section arrondie, dont les bords de l'ouverture sont arrondis et s'encastrent librement dans les rainures de forme complémentaire, creusées extérieurement vers l'extrémité des bras de la pince, l'encombrement du sabot prolongeant celui de la pince fermée.

Il est avantageux, notamment pour le démontage, que les bras de la pince soient sollicités constamment vers leur position de fermeture par un coin élastique inséré entre les bras de la pince, dans une rainure creusée en bout des bras, à l'intérieur du sabot.

La vis d'écartement peut se visser dans un trou taraudé percé dans la paroi latérale d'un des bras de la pince, pour repousser le bras opposé.

En variante, la vis d'écartement peut se visser dans un trou taraudé d'une plaque d'appui contre une tranche des bras et être insérée, avec la pince, dans le même conduit tubulaire d'un profilé, l'extrémité de la vis étant conique et coopérant avec un évidement borgne à fond conique creusé, par moitié diamétrale, dans chaque bras de la pince et débouchant dans une tranche des bras, pour écarter à force les deux bras l'un de l'autre.

Pour assurer un bon aboutement, sans jeu, de deux profilés à angle droit, les mors des bras de la pince coopèrent, par leurs bords arrondis, avec les bords de la rainure du profilé recevant les mors pour attirer ce profilé et le bloquer contre le profilé contenant le corps de la pince lorsque les mors de la pince sont écartés à force, cependant que les faces latérales des bras de la pince, en bordure des mors, viennent porter, par un bord aigu, et se bloquer contre les parois de la rainure du profilé contenant le corps de la pince, assemblant ainsi perpendiculairement l'un à l'autre les deux profilés.

L'ajustage en hauteur d'un profilé porteur entre deux plans de construction est facile, lorsqu'au moins deux profilés porteurs présentent chacun intérieurement un logement tubulaire longitudinal parallèle à l'axe du profilé, et recevant à coulissement chacun un poteau de soutien solidaire d'une semelle de fixation sur un plan horizontal d'une construction, chaque profilé présentant une pluralité de trous taraudés dans, au moins, une paroi du logement du poteau pour le vissage de vis de solidarisation du profilé et du poteau associé.

Le recouvrement esthétique des joints, et éventuellement des profilés eux-mêmes, s'effectue aisément avec, au moins, un profilé présentant extérieurement, au moins, une rainure semi-tubulaire longitudinale recevant un couvre-joint profilé en matériau élastiquement déformable, comportant des moyens d'encliquetage dans la rainure du profilé et une jupe externe de recouvrement de joint.

La fabrication en série des profilés est simplifiée et leur assemblage facilité si, au moins, un profilé présente, au moins, un plan diamétral de symétrie.

L'assemblage d'un profilé inséré entre deux profilés de soutien déjà fixés est grandement facilité si l'ouverture d'accès de l'extérieur à la vis d'écartement des mors et de maintien de la pince, percée dans le profilé contenant le corps de la pince, est en forme de lumière allongée parallèlement à l'axe du profilé, de largeur correspondant au diamètre de la vis et d'une longueur autorisant le coulissement du corps entre une position d'effacement des mors de la pince dans le profilé contenant le corps et une position active où les mors font saillie en bout du profilé de la longueur nécessaire à leur introduction dans la rainure semi-tubulaire d'un profilé à abouter.

Les éléments de construction suivant l'invention, peuvent également comprendre, au moins, un élément de maintien de plaques de cloisonnement comportant des moyens d'encliquetage dans, au moins, deux rainures semi-tubulaires longitudinales d'au moins un profilé.

De tels éléments de maintien peuvent ainsi être utilisés pour maintenir une seule plaque de cloisonnement médiane entre deux profilés, ou bien deux plaques de part et d'autre des profilés, ou encore pour réaliser un pan coupé ou un angle dièdre entre deux profilés porteurs d'extrémités de cloisons voisines, non disposées dans le prolongement l'une de l'autre.

L'invention a également pour objet un système de montage de paumelles que l'on a tout intérêt à utiliser en combinaison avec l'ensemble de cloisonnement déjà défini dans la mesure où il vise à résoudre les mêmes problèmes d'une construction amovible.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

- la figure 1 est une vue schématique, en plan et partiellement en coupe, d'un cloisonnement réalisé avec des éléments de construction suivant l'invention ;

- la figure 2 est une vue schématique, en élévation et partiellement en coupe, d'un profilé porteur du cloisonnement de la figure 1 ;

- la figure 3 est une vue schématique, en élévation et partiellement en coupe, d'une cloison comportant deux plaques de cloisonnement de part et d'autre d'un profilé ;

- la figure 4 est une vue analogue à celle de la figure 3, d'une cloison ne comportant qu'une seule plaque de cloisonnement médiane ;

- les figures 5 et 5a sont des vues respectivement de face et de côté, en élévation, d'une pince d'assemblage suivant l'invention ;

- les figures 6 et 6a sont des vues analogues à celles des figures 5 et 5a d'une variante de pince d'assemblage ;

- la figure 7 est une vue schématique, en élévation et partiellement en coupe, de l'assemblage de deux profilés par une pince des figures 5 et 5a ;

- la figure 8 est une vue en bout, d'un profilé renfermant la pince d'assemblage des figures 6 et 6a ;

- la figure 9 est une vue partielle de détail de la figure 7, illustrant le blocage des deux profilés par la pince ;

- la figure 10 est une vue analogue aux figures 5 et 6 d'une variante de pince.

- la figure 11 est une vue en coupe transversale des différentes pièces du dispositif de montage de paumelles ;

- la figure 12 est une vue en perspective d'un jeu de paumelles fixées sur un profilé de montant.

Sur ces dessins, les éléments correspondants sont désignés par les mêmes références numériques.

Les éléments de construction suivant l'invention, représentés sur les figures, comprennent principalement des profilés porteurs 1 et des profilés de liaison d'un profilé porteur à l'autre, constituant des entretoises 2, des lisses hautes 3, des lisses basses 4, des pinces d'assemblage 5, 6, 46, des éléments 7, 8 de liaison et de maintien de plaques de cloisonnement, des joints encliquetables de recouvrement 9, d'amortissement et de maintien élastique 10, d'étanchéité 11, des montants d'huisserie 35.

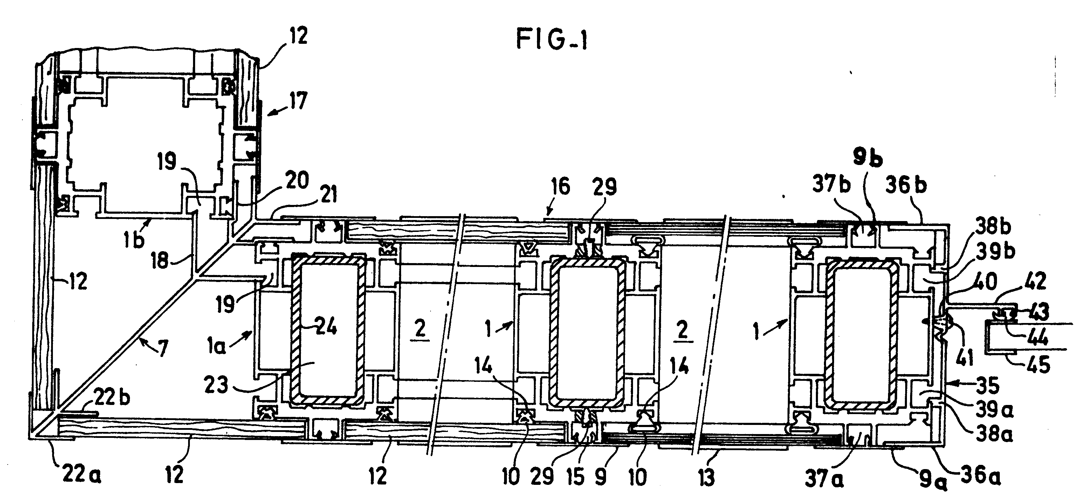

Le cloisonnement représenté en plan sur la figure 1, comprend plusieurs profilés porteurs 1 reliés par des plaques de cloisonnement disposées par paires de part et d'autre des profilés et constituées par des panneaux de bois 12 et des plaques de verre 13. Ces plaques de cloisonnement sont maintenues par des joints profilés tubulaires élastiques 10 encliquetés chacun dans une rainure longitudinale 14 semi-tubulaire d'un profilé 1. D'autres joints profilés élastiques à face extérieure plate 9, encliquetés dans d'autres rainures longitudinales 15 semi-tubulaires en saillie des profilés 1, contribuent au maintien des plaques de cloisonnement et recouvrent leur rainure 15 associée, ainsi qu'une partie marginale contigüe des plaques de cloisonnement associées.

Le cloisonnement de la figure 1 comprend deux cloisons 16, 17 disposées à angle droit, leurs profilés porteurs d'extrémité 1a et 1b sont reliés par un élément de liaison 7 profilé, à section en forme de flèche dont l'empennure comprend des ailettes symétriques, formant des dièdres à 90 degrés, comprenant des ailettes d'ancrage 18 encliquetées dans des rainures semi-tubulaires longitudinales latérales des profilés porteurs 1a et 1b, des ailettes d'appui 20 portant sur l'extérieur des profilés 1a et 1b, ainsi que des ailettes d'extrémité 21 arasant l'extérieur des rainures 15 en saillie des profilés 1a et 1b. La pointe de flèche de l'élément de liaison 7 est formée de deux paires d'ailettes 22a, 22b symétriques, formant deux dièdres à 90 degrés, parallèles, espacés de l'épaisseur des plaques de cloisonnement 12 insérées entre eux pour former l'angle entre les deux cloisons 16 et 17.

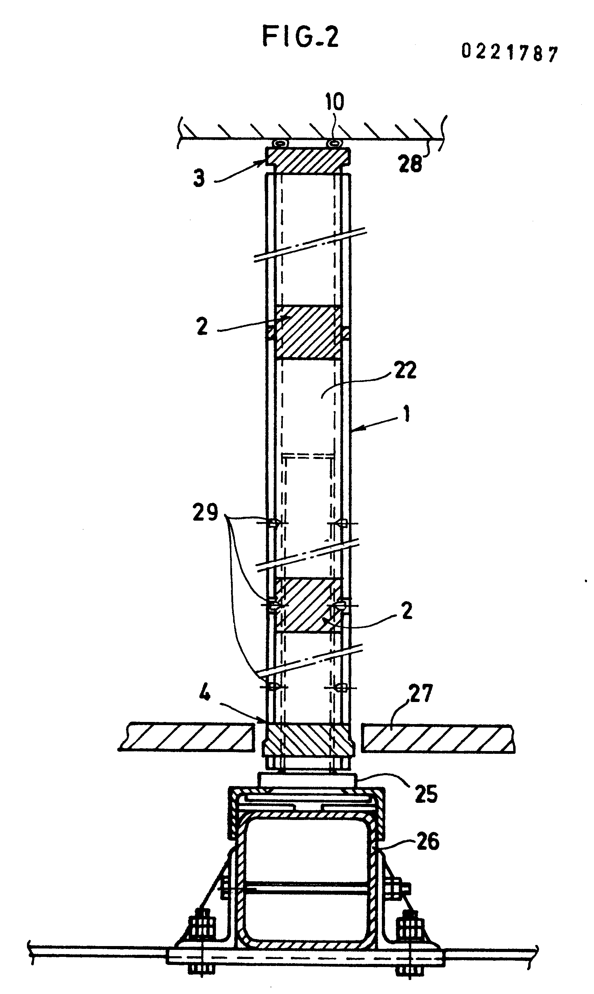

Les profilés porteurs 1 présentent intérieurement chacun, un logement tubulaire longitudinal 23 enfilé sur un poteau de soutien 24 dont la base est soudée sur une semelle 25, solidarisée d'une poutre 26 de plan horizontal de la construction supportant le cloisonnement (figure 2), cachée par un faux-plancher 27. Chaque profilé porteur 1 coulisse autour du poteau 24 associé, ce qui permet d'amener aisément son extrémité supérieure à la distance convenable du plafond 28, pour qu'un profilé de lisse 3, équipé de joints d'amortissement 10, y prenne appui. Le profilé porteur 1 est alors assujetti à son poteau 24 associé, par des vis pointeau 29 vissées directement dans une paroi épaisse du profilé 1.

En pratique, on enfile à plat les poteaux 24, équipés de leurs semelles 25, dans les profilés porteurs 1, puis on redresse l'ensemble, on assujettit les semelles 25 sur les poutres 26 et on règle la hauteur des profilés 1 avant de les solidariser de leurs poteaux 24 associés.

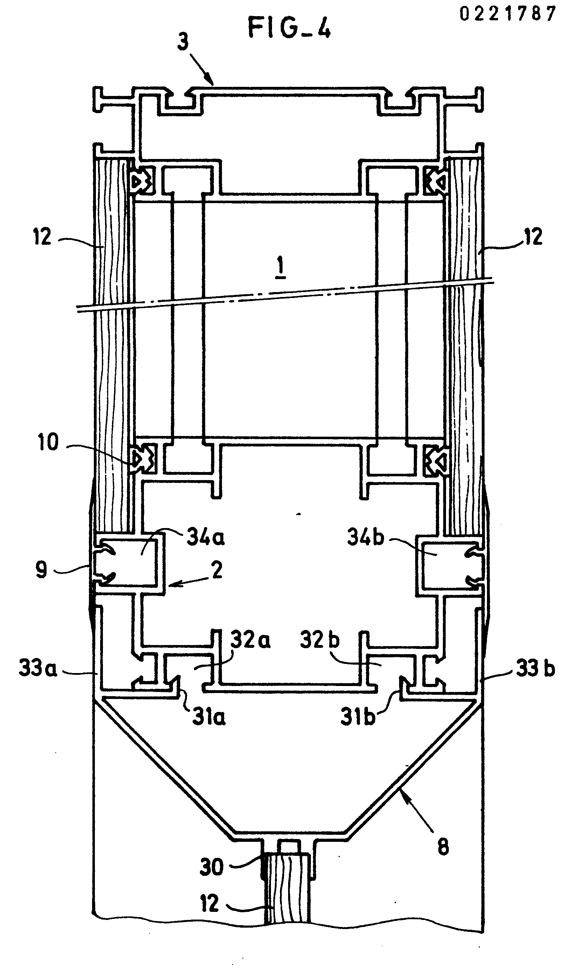

Dans le mode de réalisation représenté sur la figure 4, une unique plaque de cloisonnement 12 médiane est maintenue, dans le plan axial de la cloison, par un élément de liaison 8 profilé à section généralement trapézoïdale dont la petite base est prolongée par une section en U 30, qui emboite la tranche de la plaque 12, et dont la grande base ouverte au milieu présente deux nervures parallèles en saillie 31a, 31b, qui viennent s'encliqueter dans deux rainures semi-tubulaires longitudinales symétriques 32a, 32b d'un profilé d'entretoise 2. Les bords de la grande base du trapèze sont prolongés par deux ailettes parallèles symétriques 33a, 33b qui viennent s'insérer en dessous d'un couvre-joint 9 encliqueté dans une rainure semi-tubulaire en saillie 34a, 34b respectivement, du profilé d'entretoise 2, dans le prolongement de plaques de cloisonnement 12 disposées de part et d'autre du profilé 2, à l'opposé de l'élément de liaison 8.

Un élément de liaison 35, analogue à l'élément de liaison 8 de la figure 4, est représenté sur la figure 1. Il constitue un montant d'huisserie profilé à section générale en U, dont les deux branches latérales 36a, 36b parallèles viennent s'insérer en dessous des couvre-joints 9a, 9b encliquetés dans des rainures opposées en saillie 37a, 37b, d'un profilé porteur 1. Des nervures parallèles 38a, 38b font saillie à l'intérieur du U et portent contre la face extérieure du profilé 1 en s'insérant partiellement dans des rainures parallèles longitudinales 39a, 39 b du profilé 1, qui les calent latéralement. Des plots 40, répartis le long de l'élément de liaison 3 servent de guide et d'appui à des vis 41 se vissant dans la paroi du profilé 1, pour assurer une fixation solide de l'élément 35. Une ailette 42 fait saillie à l'extérieur de la partie intermédiaire du U, son extrémité porte une rainure 43 d'encastrement d'un profilé élastique 44 servant de butée au battant d'une porte ou d'une fenêtre 45.

Il est aisé de concevoir, de même, des éléments de liaison divers, portant, par exemple, des paumelles de pivotement de porte ou de fenêtre, des serrures, ou autres. Tous ces éléments, ayant pour caractéristique commune d'être combinables avec les profilés suivant l'invention, en utilisant leurs rainures longitudinales semi-tubulaires pour leur encliquetage ou leur calage, en association, éventuellement avec des joints ou couvre-joints encliquetés dans d'autres rainures longitudinales semi-tubulaires des profilés.

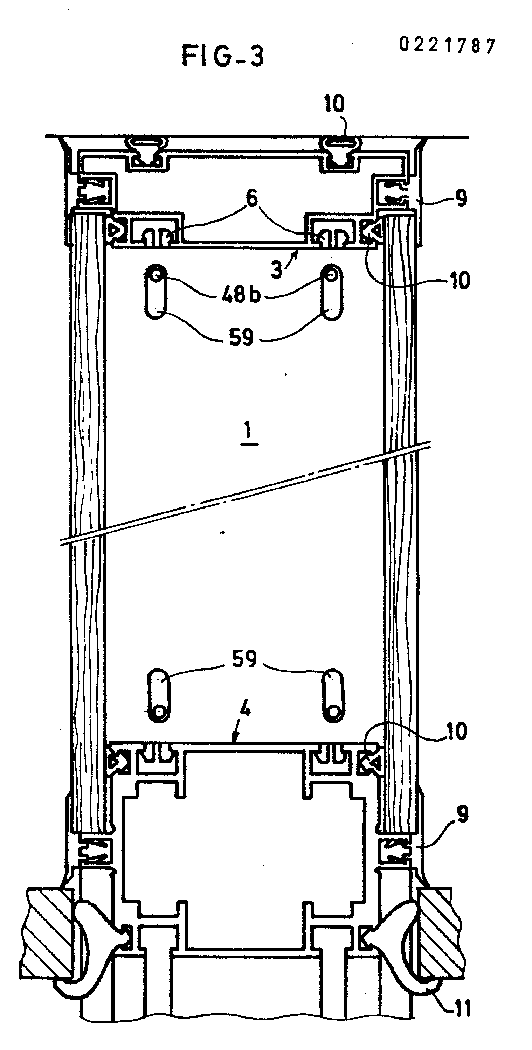

Les profilés suivant l'invention sont aboutés à angle droit les uns aux autres, l'extrémité d'un profilé étant fixée sur le côté d'un autre profilé par des pinces à écartement forcé et blocage des mors du type représenté sur les figures 3, et 5 à 10.

Ces pinces comprennent toutes, deux bras symétriques plats affrontés 47a, 47b, écartés par l'insertion d'une vis 48 entre eux. Ces bras sont terminés chacun par une rainure galbée 49a, 49b, parallèle aux extrémités de la pince qui s'écartent lorsqu'on visse la vis d'écartement. A l'extrémité opposée, les bras de la pince présentent, également chacun, une rainure 50a, 50b, qui assure le maintien et l'articulation des bras 47a, 47b entre eux.

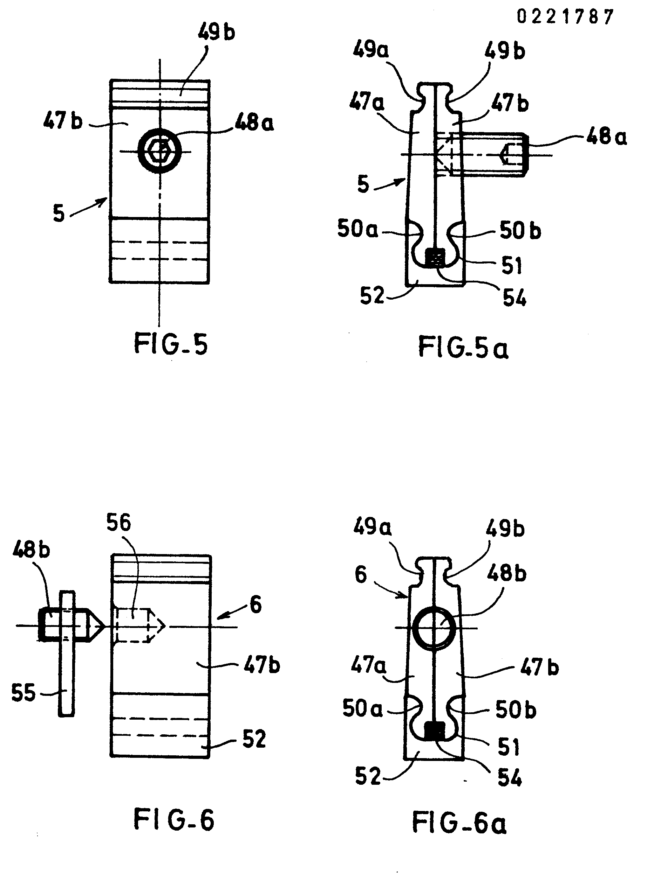

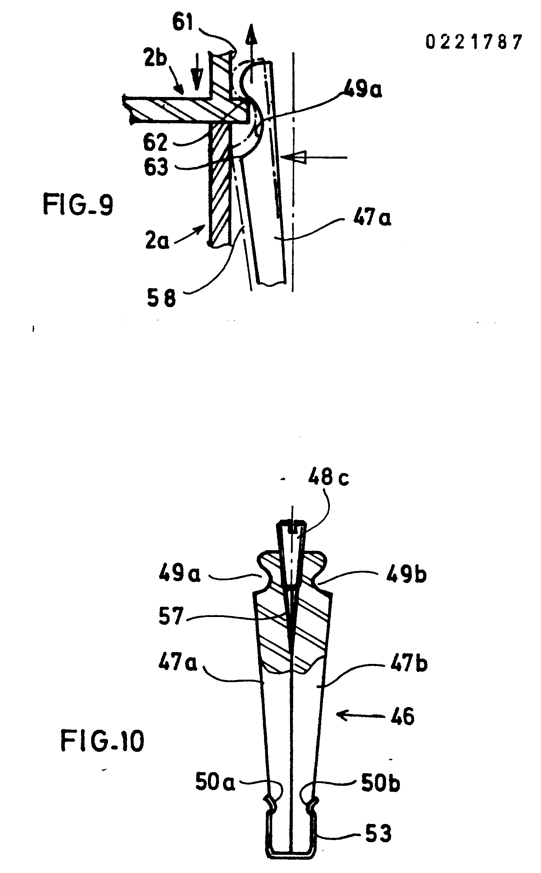

Dans le mode de réalisation des figures 5 et 6, les rainures de maintien 50a, 50b se prolongent vers l'extrémité de la pince par une partie semi-cylindrique 51 qui vient s'emboîter à glissement dans une rainure correspondante d'un sabot en U 52, on voit que de cette manière les deux bras 47a, 47b, d'une telle pince sont articulés l'un à l'autre à l'intérieur dudit sabot 52 creusé d'une rainure perpendiculaire à l'axe de la pince et de section arrondie, dont les bords de l'ouverture sont arrondis et s'encastrent librement dans les rainures de forme complémentaire 50, creusées extérieurement vers l'extrémité des bras de la pince, l'encombrement du sabot prolongeant celui de la pince fermée, tandis que dans le mode de réalisation de la figure 10, les rainures de maintien 50a, 50b, reçoivent les extrémités repliées en U d'une lame de ressort 53 qui assure, à la fois le maintien en place réciproque des bras 47a, 47b de la pince 46 et leur rappel élastique en position de fermeture de la pince.

Ce rappel élastique est assuré dans le mode de réalisation des figures 5, 5a et 6, 6a, par un jonc en élastomère 54, inséré entre les extrémités des bras 47a, 47b creusés d'une rainure correspondante. Le jonc 54 est maintenu en place par le sabot 52.

Dans le mode de réalisation des figures 5 et 5a, la vis d'écartement 48a est vissée dans un trou taraudé du bras 47b et son extrémité vient appuyer sur la face opposée du bras 47a pour l'écarter, tandis que dans le mode de réalisation des figures 6a et 6b, la vis d'écartement 48b est vissée dans une plaque d'appui 55 et son extrémité pointue vient s'insérer dans un logement cylindroconique 56, creusé latéralement par moitié diamétrale dans les faces affrontées des bras 47a, 47b.

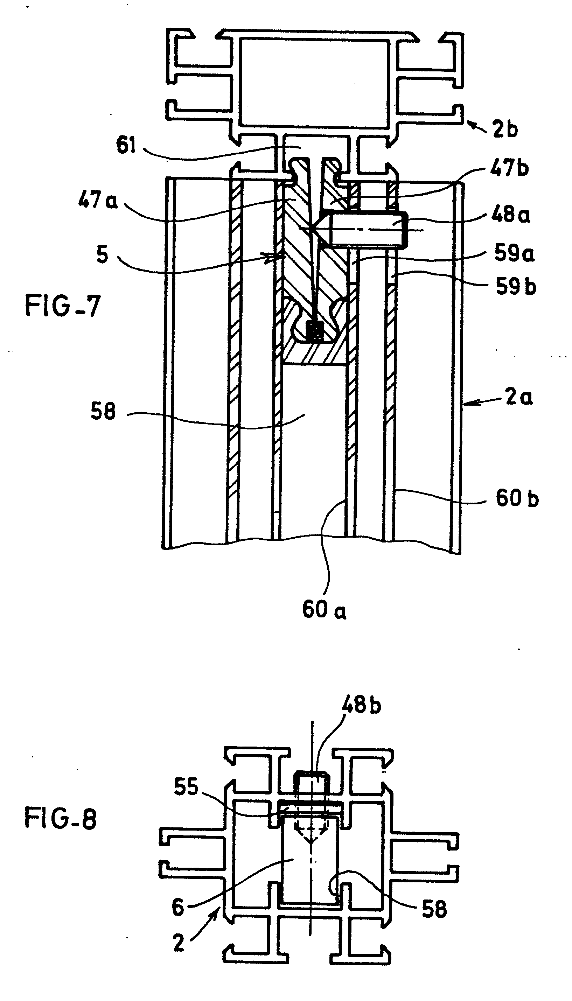

Cette plaque d'appui 55 est insérée avec la pince 6 dans un conduit tubulaire 58 d'un profilé 2, dont une paroi est percée pour le passage de la vis d'écartement 48b, comme représenté sur la figure 8.

La vis d'écartement 48c du mode de réalisation de la figure 10 est conique et vissée dans un taraudage conique 57 correspondant creusé par moitié diamétrale dans les extrémités des bras 47a, 47b.

Les figures 3, 7 et 10 illustrent le mode d'aboutement et de blocage des profilés par les pinces.

Comme représenté sur la figure 7, une pince 5 est insérée en bout dans un conduit tubulaire 58 d'un profilé 2a, sa vis d'écartement 48a faisant saillie à travers des lumières 59a, 59b creusées en correspondance dans des cloisons parallèles 60a, 60b du profilé 2a. Ces lumières 59a, 59b sont de forme allongée, leur largeur est légèrement supérieure au diamètre de la vis 48a, tandis que leur longueur, d'environ deux fois et demi leur largeur dans l'exemple représenté, permet le coulissement de la vis 48a et, par suite, de la pince 5 vers l'intérieur du profilé 2a, de façon telle que les mors 49a et 49b de la pince 5 ne fassent plus saillie de l'extrémité du profilé 2a, mais que la pince 5 soit toujours maintenue dans le conduit tubulaire 58 par la vis 48a. Cette disposition facilite la mise en place de l'extrémité du profilé 2a contre la face latérale du profilé 2b à abouter, principalement lorsque le profilé 2a est à insérer entre le profilé 2b et un autre profilé parallèle, déjà en place.

Une fois les deux profilés 2a et 2b en place, on fait coulisser la pince 5 dans son conduit tubulaire 58 à l'aide de la vis 48a servant d'ergot jusqu'à ce que les rainures 49a, 49b des mors de la pince 5 viennent en regard des bords de la rainure longitudinale semi-tubulaire 61 du profilé 2b, appelés à les recevoir. On peut alors visser la vis 48a pour écarter les bras 47a, 47b de la pince 5 et bloquer la pince simultanément dans les profilés 2a et 2b, comme représenté plus en détail, mais pas à l'échelle, pour une meilleure compréhension sur la figure 9.

Lorsqu'on commence à écarter les bras de la pince, comme indiqué en trait plein sur la figure 9, le bras 47a de la pince 5 (et symétriquement le bras 48a, non représenté) vient porter par la courbure extrême de l'intérieur de sa rainure 49a, contre le bord interne 62 de la tranche de la cloison de la rainure semi-tubulaire 61 du profilé 2b. Lorsqu'on continue à visser la vis 48a, l'écartement des bras de la pince provoque le glissement du bord 62 de la cloison du profilé 2b vers l'intérieur de la rainure 49a, avec un effet de coin qui devient extrêmement puissant lorsque le bord vif 63 de la rainure 49a vient porter et s'arc-bouter contre la paroi du conduit 58. Ceci amène un blocage sans jeu de l'extrémité du profilé 2a contre la paroi latérale du profilé 2b.

L'aboutement d'un profilé porteur 1 à un profilé de lisse supérieure 3, par des pinces 6 du type des figures 6a et 6b, est représenté sur la figure 3.

Les profilés, plus particulièrement les profilés porteurs 1 et les profilés d'entretoises 2, ont avantageusement une section présentant, au moins un plan de symétrie, ce qui facilite le montage par absence de repérage. Par contre, les profilés de lisses 3, 4 peuvent avoir une forme dissymétrique pour des motifs principalement esthétiques.

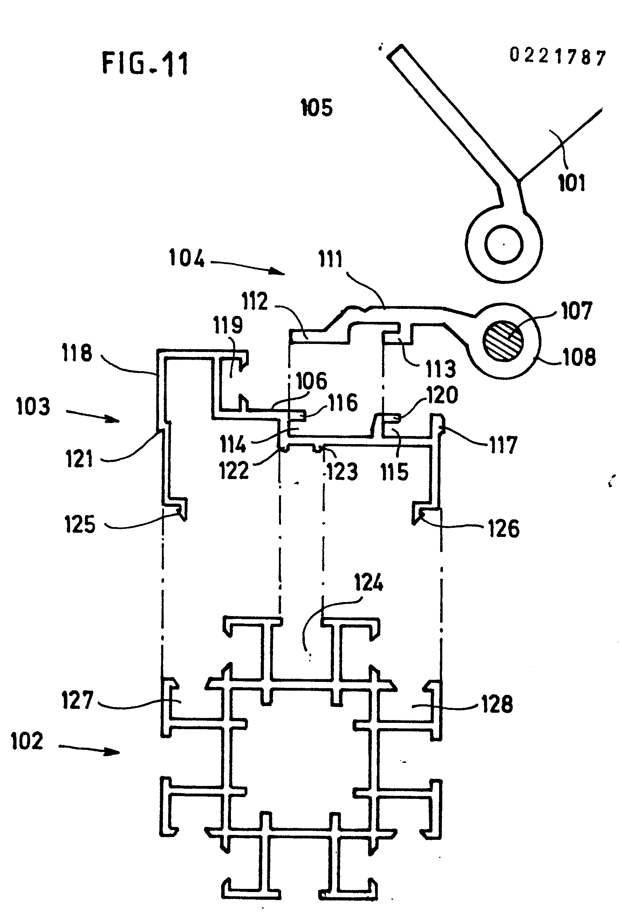

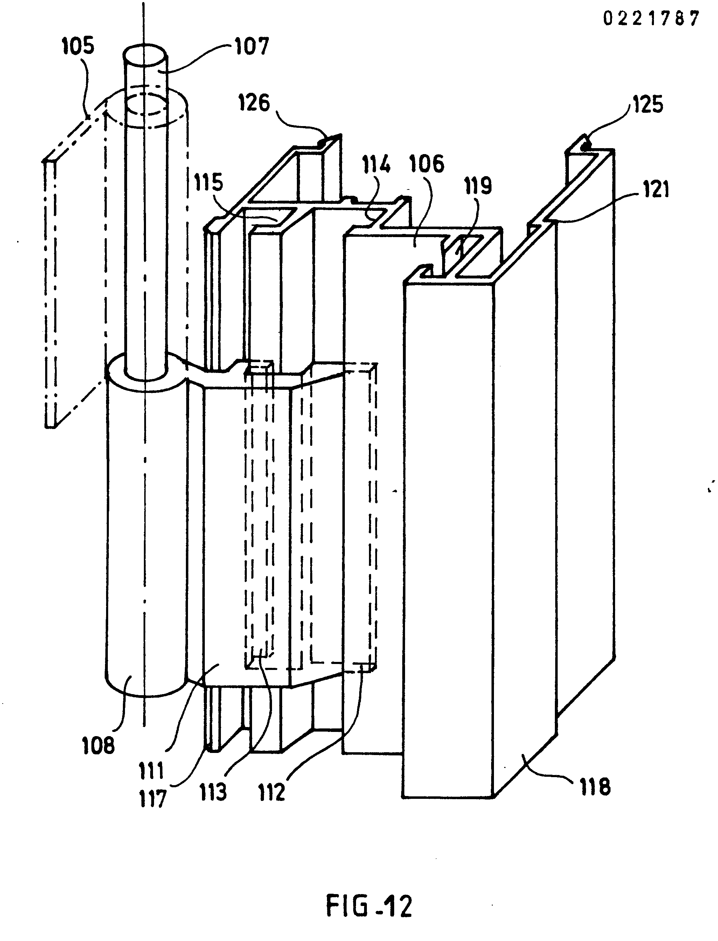

On décrira maintenant, en se référant aux figures 11 et 12, le système de montage de paumelles qui permet d'articuler les battants des portes et fenêtres sur les profilés d'un ensemble de cloisonnement réalisé conformément aux figures précédentes.

Dans la description de ce mode de réalisation particulier du système de montage de paumelles selon l'invention, on supposera que les paumelles sont utilisées pour articuler le battant 101 d'une porte ou d'une fenêtre sur un profilé longitudinal 102 d'un ensemble de cloisonnement amovible autour d'un axe de rotation vertical. Le profilé 102 est donc en disposition verticale, de même que le profilé de montant 103 que comporte le système. Toutefois, la réalisation décrite pourrait être utilisée sans modification dans le cas d'un axe de rotation horizontal, le profilé dit de montant 103 étant alors, bien entendu, disposé horizontalement.

L'articulation du battant 101 est assurée par un ou plusieurs jeux de paumelles qui comprennent chacun une paumelle fixe 104 et une paumelle mobile 105. La paumelle mobile 105 est fixée, par des moyens quelconques en eux-mêmes connus, sur la tranche verticale du battant 101, de préférence à l'intérieur d'une encoche ménagée à cet effet dans le battant. La paumelle fixe 104 se monte par contre, par simple emboîtement, sans vis ni boulon, sur une face extérieure 106 du profilé de montant 103, celle-ci étant orientée perpendiculairement à la direction du battant 101 lorsque celui-ci est en position fermée. Les deux paumelles sont liées d'une manière classique permettant la rotation entre elles, ici par un pivot vertical 107, dressé vers le haut, que porte une pièce de liaison 108 de la paumelle fixe et qui s'engage dans un alésage correspondant de la paumelle mobile.

La paumelle fixe comporte, en plus de la pièce de liaison 108, une plaque 111 d'affacement avec la face extérieure 106 du profilé de montant destinée à la recevoir. Cette plaque forme des nervures en saillie, au moins au nombre de deux, propres à s'engager dans des rainures coopérantes du profilé de montant. On voit sur les figures que le deux nervures 112 et 113 présentent une section en forme de L, à la manière d'une baïonnette, avec pour chacune une partie perpendiculaire à la plaque 111 et une partie parallèle s'éloignant de la pièce de liaison 108. Les rainures coopérantes 114 et 115 sont creusées longitudinalement dans la face 106 du profilé de montant, sur une hauteur qui correspond, au jeu près, à celle de la plaque 111 de la paumelle. Elles présentent également une section en forme de L, de manière à former des logements pour respectivement chacune des deux nervures de la plaque 111. Leur ouverture sur l'extérieur est de largeur suffisante pour livrer passage aux bases des nervures qui sont parallèles à la plaque 111 et qui peuvent ensuite venir se bloquer derrière des rebords du profilé, tels que 116, 120, par un mouvement de translation parallèle à la face 106.

On comprend donc que le montage de la paumelle fixe 104 sur le profilé de montant 103 s'effectue par engagement des nervures 102 et 103 et dans les rainures 114 et 115 avec un mouvement d'emboîtement parallèlement à la face 106 à partir de la pièce de laision 108. On remarque que cette dernière reste alors à l'extérieur du profilé de montant 103. Ce dernier présente un bourrelet 117 sur lequel la paumelle vient en appui.

Du côté opposé à l'axe de rotation de la paumelle, le profilé de montant 103 forme extérieurement un rebord de feuillure 118 qui se place en débord de la face 106 et qui, perpendiculairement à cette dérnière, présente une rainure longitudinale 119. Celle-ci est destinée à recevoir un joint (non représenté) qui assure un appui élastique sur le battant 101 lorsque celui-ci est en position fermée.

Après le rebord de feuillure 118, sur la face extérieure perpendiculaire à la face 106, le profilé de montant présente un décrochement longitudinal 121 qui se place légèrement en retrait du rebord de feuillure 118, ce qui permet de recevoir un couvre-joint (non représenté) de cette partie de l'ensemble de cloisonnement.

Dans ses dimensions et dans sa forme, le profilé de montant 103 est déterminé de manière à pouvoir s'adapter sur le profilé longitudinal vertical 102 de l'ensemble de cloisonnement. A cet effet, il forme du côté interne de la face 106 deux rebords longitudinaux 122 et 123 qui viennent s'engager enter les bords d'une rainure 124 du profilé 102, et assurent ainsi son positionnement latéral par rapport à ce profilé. Sur ses deux faces perpendiculaires à la face 106 il forme par ailleurs des nervures 125 et 126 respectivement qui constituent un décrochement vers l'intérieur venant en appui sur des décrochements correspondants du profilé 102. Du côté interne, les nervures 125 et 126 forme des rebords capables de s'encliqueter élastiquement sur les bords de rainures 127 et 128 du profilé 102, assurant ainsi la fixation des deux profilés l'un sur l'autre.

La rainure 124 du profilé 102 est celle qui, dans l'ensemble de cloisonnement amovible, est susceptible de recevoir des moyens d'assemblage, plus particulièrement les pinces 5, 6, 46 décrites dans la présente invention.

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques des moyens décrits ainsi que leurs combinaisons.

**Revendications**

1. Eléments de construction assemblables et désassemblables pour la fabrication notamment de cloisons et d'encadrements, comprenant plusieurs profilés sectionnés perpendiculairement à leur axe et des organes pour leur assemblage à angle droit, caractérisés en ce que les organes d'assemblage sont constitués par des pinces (5,6, 46) à moyens de commande d'écartement forcé avec blocage des mors, en ce qu'au moins un profilé (1, 2, 3, 4) présente latéralement, au moins une rainure longitudinale (61) semi-tubulaire à section alvéolaire ouverte, parallèle à l'axe du profilé et d'ouverture rectiligne laissant passage aux mors resserrés d'une pince d'assemblage mais interdisant le passage aux mors écartés, en ce qu'au moins un profilé présente au moins un conduit tubulaire (58), parallèle à l'axe du profilé, de section correspondant à l'encombrement du corps d'une pince d'assemblage et en ce qu'au moins un profilé présente, au moins une ouverture d'accès de l'extérieur aux moyens de commande d'écartement d'une pince.

2. Eléments de construction suivant la revendication 1, caractérisés en ce qu'ils comprennent au moins une pince plate (5, 6, 46) de forme générale rectangulaire comportant deux bras symétriques (47) affrontés par des faces planes et présentant chacun, à une extrémité constituant le mors, une rainure rectiligne (49) à bords arrondis perpendiculaire à l'axe de la pince, et articulés l'un à l'autre à leur autre extrémité, les moyens d'écartement des mors comprenant une vis (48) faisant saillie à l'extérieur de la pince et traversant une ouverture (59) d'au moins une paroi (60) du profilé pour maintenir la pince dans son conduit avant assemblage des profilés.

3. Eléments de construction suivant la revendication 2, caractérisé en ce que les deux bras (47) d'une telle pince sont articulés l'un à l'autre à l'intérieur d'un sabot en U (52) creusé d'une rainure perpendiculaire à l'axe de la pince et de section arrondie, dont les bords de l'ouverture sont arrondis et s'encastrent librement dans les rainures de forme complémentaire (50), creusées extérieurement vers l'extrémité des bras de la pince. l'encombrement du sabot prolongeant celui de la pince fermée.

4. Eléments de construction suivant la revendication 3, caractérisés en ce que les bras (47) de la pince sont sollicités constamment vers leur position de fermeture par un coin élastique (54) inséré entre les bras de la pince, dans une rainure creusée en bout de bras, à l'intérieur du sabot (52).

5. Eléments de construction, suivant la revendication 4, caractérisés en ce que la vis (48) d'écartement est vissée dans un trou taraudé percé dans la paroi latérale d'un des bras (47) de la pince, pour repousser le bras opposé.

6. Eléments de construction, suivant la revendication 4, caractérisés en ce que la vis (48) d'écartement est vissée dans un trou taraudé d'une plaque d'appui (55) contre une tranche des bras et insérée, avec la pince (6), dans le même conduit tubulaire (58) d'un profilé (2), l'extrémité de la vis étant conique et coopérant avec un évidement (56) borgne à fond conique creusé, par moitié diamétrale, dans chaque bras (47) de la pince et débouchant dans une tranche des bras, pour écarter à force les deux bras l'un de l'autre.

7. Eléments de construction suivant la revendication 6, caractérisés en ce que les mors (47) des bras de la pince coopèrent, par leurs bords arrondis (49), avec les bords (62) de la rainure (61) du profilé (2b) recevant les mors pour attirer ce profilé et le bloquer contre le profilé (2a) contenant le corps de la pince lorsque les mors de la pince sont écartés à force, cependant que les faces latérales des bras de la pince, en bordure des mors, viennent porter, par un bord aigu (63), et se bloquer contre les parois de la rainure (58) du profilé contenant le corps de la pince, assemblant ainsi perpendiculairement l'un à l'autre les deux profilés.

8. Eléments de construction suivant la revendication 7, caractérisés en ce qu'ils comprennent, au moins deux profilés porteurs (1) présentant chacun intérieurement un logement tubulaire (22) longitudinal parallèle à l'axe du profilé, et recevant à coulissement chacun un poteau (24) de soutien solidaire d'une semelle (25) de fixation sur un plan horizontal d'une construction, chaque profilé présentant une pluralité de trous taraudés dans, au moins, une paroi du logement du poteau pour le vissage de vis (29) de solidarisation du profilé et du poteau associé.

9. Eléments de construction suivant la revendication 8, caractérisés en ce qu'ils comprennent, au moins un profilé présentant extérieurement, au moins, une rainure (14) semi-tubulaire longitudinale recevant un couvre-joint profilé (9, 10) en matériau élastiquement déformable, comportant des moyens d'encliquetage dans la rainure du profilé et une jupe externe de recouvrement de joint.

10. Eléments de construction suivant la revendication 9, caractérisés en ce qu'au moins un profilé présente, au moins, un plan diamétral de symétrie.

11. Eléments de construction suivant la revendication 10, caractérisés en ce que l'ouverture (59) d'accès de l'extérieur à la vis d'écartement (48) des mors et de maintien de la pince, percée dans le profilé contenant le corps de la pince, est en forme de lumière allongée parallèlement à l'axe du profilé, de largeur correspondant au diamètre de la vis et d'une longueur autorisant le coulissement du corps entre une position d'effacement des mors de la pince dans le profilé contenant le corps et une position active où les mors font saillie en bout du profilé de la longueur nécessaire à leur introduction dans la rainure semi-tubulaire d'un profilé à abouter.

12. Eléments de construction suivant la revendication 11, caractérisés en ce qu'ils comprennent, au moins un élément (7, 8) de maintien de plaque de cloisonnement (12, 13) comportant des moyens d'encliquetage (18, 31) dans, au moins, deux rainures semi-tubulaires longitudinales (19, 32) d'au moins un profilé.

13. Système de montage de paumelles selon la revendication 1, caractérisé en ce qu'il comporte un profilé de montant (103) présentant un face extérieure (106) de réception de paumelle et une paumelle fixe (104), comportant une pièce (108) de liaison avec une paumelle mobile (105) permettant la rotation de celle-ci et une plaque (11) d'affacement avec ladit face extérieure de réception de paumelle du profilé de montant (103) et en ce que ladit plaque (111) forme des nervures en saillie en forme de L (112, 113) proprés à s'engager dans des rainures coopérantes (114, 115) creusées en forme de L longitudinalement dans ladite face par emboîtement parallèlement à ladite face à partir de ladite pièce de liaison, celle-ci restant à l'extérieur dudit profilé de montant.

14. Système de montage de paumelles selon la revendication 13, caractérisé en ce que ledit profilé forme un rebord de feuillure (118) présentant, perpendiculairement à ladite face extérieure de réception de paumelles (106), une rainure longitudinale (119) de réception d'un joint propre à s'appliquer contre un battant (101) sur lequel est fixée ladite paumelle mobile (105).

15. Système de montage de paumelles selon la revendication 13, caractérisé en ce que ledit profilé de montant (103) comporte des moyens de positionnement (122, 123) et/ou de fixation par encliquetage (125, 126) avec un profilé longitudinal parallèle d'un élément de construction assemblable et désassemblable pour la fabrication notamment de cloisons et d'encadrements, comprenant plusieurs profilés sectionnés perpendiculairement à leur axe et des organes pour leur assemblage à angle droit, les organes d'assemblage étant constitués par des pinces (5, 5, 46) à moyens de commande d'écartement forcé avec blocage des mors, un profilé (1, 2, 3, 4) présente latéralement, au moins une rainure longitudinale (61) semi-tubulaire à section alvéolaire ouverte, parallèle à l'axe du profilé et d'ouverture rectiligne laissant passage aux mors resserrés d'une pince d'assemblage mais interdisant le passage aux mors écartés, un profilé présente au moins un conduit tubulaire (58), parallèle à l'axe du profilé, de section correspondant à l'encombrement du corps d'une pince d'assemblage et en ce qu'au moins un profilé présente, au moins une ouverture d'accès de l'extérieur aux moyens de commande d'écartement d'une pince. lesdits moyens étant propres à coopérer avec une rainure longitudinale du profilé longitudinal dudit ensemble permettant son assemblage avec un profilé de traverse perpendiculaire.

FIG-1

FIG.2

0221787

FIG-3 0221787

FIG_4

0221787

0221787

FIG.5

FIG.5a

FIG.6

FIG.6a

0221787

FIG-7

61
47a
5
58

2b
47b
48a
59a
59b
2a
60b
60a

FIG-8

48b
55
6
2
58

0221787

FIG.9

FIG.10

FIG.11

0221787

FIG -12